# FASCICULE DE BREVET EUROPEEN

(11) **EP 1 042 851 B1**
(45) Date de publication et mention de la délivrance du brevet: **03.01.2007**
(21) Numéro de dépôt: 99923690.4
(22) Date de dépôt: 08.06.1999
(51) Int. Cl.: H02G 3/06

(54) **ACCESSOIRE D'ANGLE A ANGLE VARIABLE POUR GOULOTTE**
WINKELZUBEHÖRVERBINDUNGSELEMENT FÜR KABELRINNE MIT EINSTELLBAREM WINKEL
ANGLE ACCESSORY WITH VARIABLE ANGLE FOR CONDUIT

(30) Priorité: 28.10.1998 FR 9813495
(43) Date de publication de la demande: 11.10.2000
(73) Titulaire: LEGRAND, 87000 Limoges (FR); LEGRAND SNC, 87000 Limoges (FR)
(72) Inventeur: PIOLE, David, F-72430 Avoise (FR); PERRIGNON DE TROYES, François, F-72140 Mont Saint Jean (FR); DECORE, Bertrand, F-72650 La Chapelle Saint Aubin (FR)
(74) Mandataire: Santarelli
(86) Numéro de dépôt international: PCT/FR1999/001345
(87) Numéro de publication internationale: WO 2000/025403

(56) Documents cités:
- EP-A- 0 734 107

## Description

La présente invention concerne d'une manière générale les goulottes du type de celles mises en oeuvre, par exemple, pour le support, le logement et la protection de divers appareillages, et, en particulier, de divers appareillages électriques, aussi bien que pour le support, le logement et la protection des conducteurs, canalisations ou autres équipements nécessaires à la desserte de ces appareillages.

Ainsi qu'on le sait, une goulotte présente, par définition, un socle, de section transversale ouverte, par lequel se fait sa fixation à une quelconque paroi, et un couvercle qui, pour la fermeture de ce socle, est à rapporter de manière amovible sur celui-ci.

Ainsi qu'on le sait, également, une telle goulotte intervient en pratique par tronçon, notamment lorsque, passant d'une première cloison à une deuxième cloison faisant un dièdre avec la précédente, elle est l'objet d'un changement d'orientation.

La présente invention concerne plus particulièrement les accessoires de cheminement, communément appelés accessoires d'angle, mis en oeuvre pour établir toute la continuité souhaitable entre deux tronçons de goulotte cheminant ainsi sur des parois faisant entre elles un dièdre dont l'angle est en pratique globalement égal à 90°.

Ces accessoires d'angle forment ce qu'il est communément convenu d'appeler un "angle intérieur" lorsque le dièdre correspondant est un dièdre rentrant, et un "angle extérieur", lorsque ce dièdre est un dièdre sortant, c'est-à-dire un dièdre saillant.

Dans tous les cas, ils comportent globalement, un cache propre à s'étendre entre les couvercles des deux tronçons de goulotte à relier.

Ce cache comporte, en pratique, deux joues, à raison d'une pour chacun des tronçons de goulotte, et, pour leur adaptation à ceux-ci, ces joues forment un dièdre entre elles, à l'image des parois correspondantes.

Le problème, en l'espèce, est double.

D'une part, il convient d'assurer de manière satisfaisante la fixation de ce cache.

D'autre part, compte tenu des tolérances de construction dont sont inévitablement l'objet les bâtiments les plus usuels, ce cache doit pouvoir s'adapter à des dièdres d'angle très légèrement différent de 90°, la valeur de cet angle étant par exemple comprise entre 85° et 95°.

La présente invention concerne plus précisément, encore, les accessoires d'angle, communément appelés angles variables, dont le cache est capable d'une telle adaptation.

Selon un premier type de réalisation déjà connu, les deux joues du cache sont mécaniquement reliées l'une à l'autre par une charnière soit que, comme décrit dans le brevet français qui, déposé sous le 78 20683, a été publié sous le No 2 431 209, cette charnière soit formée par une paroi de moindre épaisseur qui, d'un seul tenant avec les deux joues, relie en continu celles-ci, soit que, plus communément, elle soit constituée par deux pivots par lesquels les deux joues sont articulées l'une à l'autre.

Le plus souvent, la liaison mécanique ainsi établie entre les deux joues est relativement rigide, et il en résulte que tout choc appliqué à l'une de ces joues se transmet pour l'essentiel à l'autre, au risque d'une possible séparation de tout ou partie de l'ensemble par rapport à la goulotte.

En outre, lorsque la charnière correspondante est constituée de pivots, s'ajoute à ce risque le risque d'une séparation des deux joues l'une par rapport à l'autre au niveau de ces pivots, notamment dans le cas d'un angle extérieur.

Dans le brevet français qui, déposé sous le No 95 02753, a été publié sous le No 2 731 496, les deux joues, dissociées l'une de l'autre, sont recouvertes en commun d'une peau en matière souple et élastique formant charnière.

Mais, si elle présente un intérêt certain, la réalisation correspondante est relativement coûteuse et complexe.

Suivant un deuxième type de réalisation déjà connu, les deux joues du cache sont complètement dissociées l'une de l'autre; tel que cela est le cas, par exemple, dans le brevet britannique qui, déposé sous le No 87 12133, a été publié sous le No 2 205 200.

La fixation de ces joues se fait alors individuellement pour chacune d'elles, en intervenant en pratique directement sur le socle du tronçon de goulotte correspondant.

Outre une certaine complexité de mise en place, il en résulte quasi inévitablement des difficultés d'ajustement de ces joues entre elles.

Le document EP-A-0 734 107 décrit un accessoire d'angle pour goulotte conformément au préambule de la revendication 1.

La présente invention a d'une manière générale pour objet une disposition permettant d'éviter ces inconvénients.

De manière plus précise, elle a pour objet un accessoire d'angle pour goulotte, c'est-à-dire un accessoire de cheminement destiné à établir une continuité entre deux tronçons de goulotte cheminant chacun respectivement sur deux parois faisant un dièdre entre elles et comportant chacun un socle et un couvercle, cet accessoire d'angle étant du genre comportant un cache propre à s'étendre entre les couvercles des deux tronçons de goulotte, et étant d'une manière générale caractérisé en ce qu'il comporte deux supports, à raison d'un par tronçon de goulotte, chacun de ces deux supports présentant, d'une part, des moyens d'assemblage propres à permettre de le rapporter sur le socle du tronçon de goulotte correspondant, et, d'autre part, des moyens de réception propres à permettre d'y assujettir le cache, et en ce que, conjointement, le cache est dissocié en deux joues distinctes, à raison d'une joue par support, et, donc, à raison d'une joue par tronçon de goulotte.

Grâce à la présence des deux supports ainsi mis en oeuvre, qui interviennent à la manière d'interfaces entre les joues du cache et le socle des tronçons de goulotte, il est avantageusement possible de concilier une fixation facile et adéquate du cache à ces tronçons de goulotte et un ajustement convenable l'une à l'autre des deux joues de ce cache, quel que soit l'éventuel écart, par rapport à la normale, c'est-à-dire par rapport à un angle droit, de l'angle du dièdre correspondant, pourvu, bien entendu, que cet écart reste dans les limites prévues.

Préférentiellement, entre les deux supports prévus suivant l'invention interviennent des moyens d'engagement par lesquels ces deux supports sont, au moins localement, en prise l'un avec l'autre.

Ces moyens d'engagement permettent avantageusement un positionnement précis des deux supports l'un par rapport à l'autre, et, par là, ils sont particulièrement favorables à un ajustement correct des deux joues portées par ces supports, sans que ces joues soient, elles, reliées entre elles.

Tout en assurant ce positionnement, les moyens d'engagement intervenant entre les deux supports assurent en outre avantageusement une certaine liaison et une certaine articulation entre ces supports, sans cependant qu'il y ait une réelle opération d'assemblage à appliquer à ceux-ci.

Ainsi, tout en constituant un angle variable, l'accessoire d'angle suivant l'invention est avantageusement particulièrement simple à mettre en place, et, une fois en place, le cache qu'il comporte est particulièrement bien ajusté, au bénéfice de l'esthétique.

En outre, il est avantageusement particulièrement résistant aux chocs.

Enfin, les supports que met en oeuvre l'accessoire d'angle suivant l'invention sont avantageusement faciles et économiques à mouler, parce que, même avec les moyens d'engagement destinés à intervenir entre eux, leur forme reste relativement simple.

Les caractéristiques et avantages de l'invention ressortiront d'ailleurs de la description qui va suivre, à titre d'exemple, en référence aux dessins schématiques annexés sur lesquels :
la figure 1 est une vue en perspective, en partie éclatée, d'un accessoire d'angle suivant l'invention, représenté en place sur deux tronçons de goulotte, pour une forme de réalisation correspondant à un angle extérieur ;
la figure 2 est une vue en perspective analogue à celle de la figure 1. après enlèvement des deux joues du cache que comporte cet accessoire d'angle ;
la figure 3 est, à échelle supérieure, une vue partielle en perspective des deux supports que comporte également cet accessoire d'angle, vus de l'avant ;
la figure 4 est une vue partielle en perspective de ces deux supports, vus de l'arrière ;
la figure 5 en est, à échelle différente, une vue en coupe, suivant, sensiblement, la ligne V-V de la figure 2 ;
la figure 6 est, à la même échelle que la figure 5, une vue en perspective d'un de ces supports, vu de l'avant ;
la figure 7 est une autre vue en perspective de ce support, vu de l'arrière ;
les figures 8, 9, 10 et 11 en sont, à échelle supérieure, des vues partielles en coupe transversale, suivant, chacune respectivement, les lignes VIII-VIII, IX-IX, X-X et XI-XI de la figure 7 ;
les figures 12 et 13 sont des vues en perspective, qui, analogues, chacune respectivement, aux figures 6 et 7, se rapportent à l'autre des supports que comporte l'accessoire d'angle suivant l'invention ;
la figure 14 est une vue en perspective d'une des parties constitutives d'une des joues du cache de l'accessoire d'angle suivant l'invention, vue de l'arrière ;

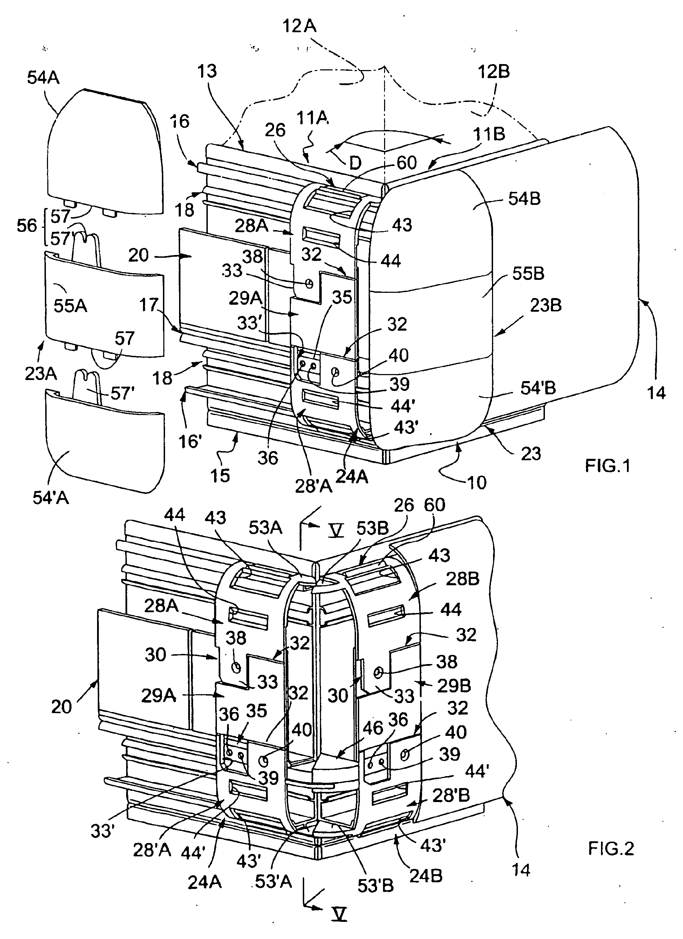

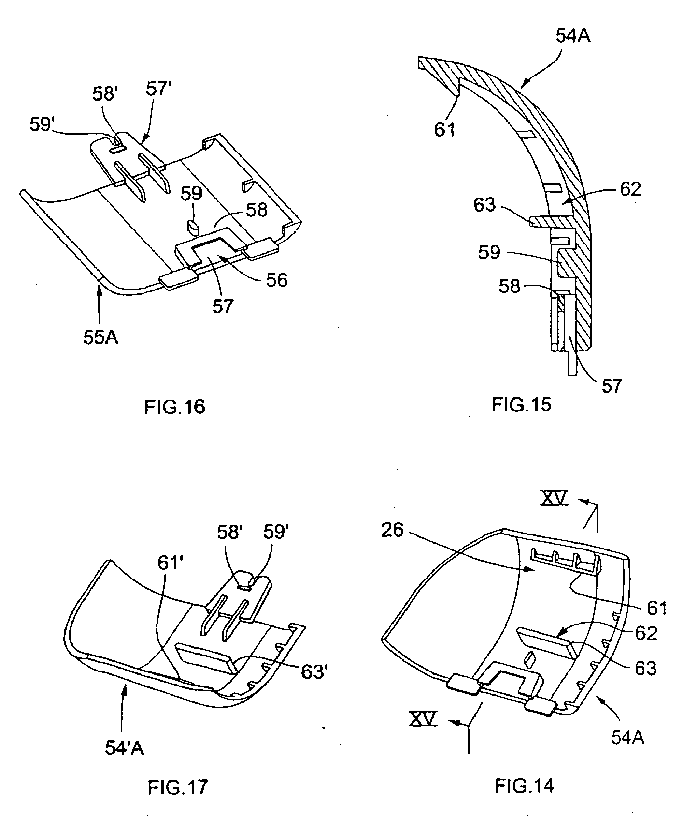

la figure 1 5 est, à échelle supérieure, une vue en coupe transversale de cette partie de cette joue, suivant la ligne XV-XV de la figure 14 ;
la figure 16 est une vue en perspective d'une autre des parties constitutives de celle-ci, vue de l'arrière ;

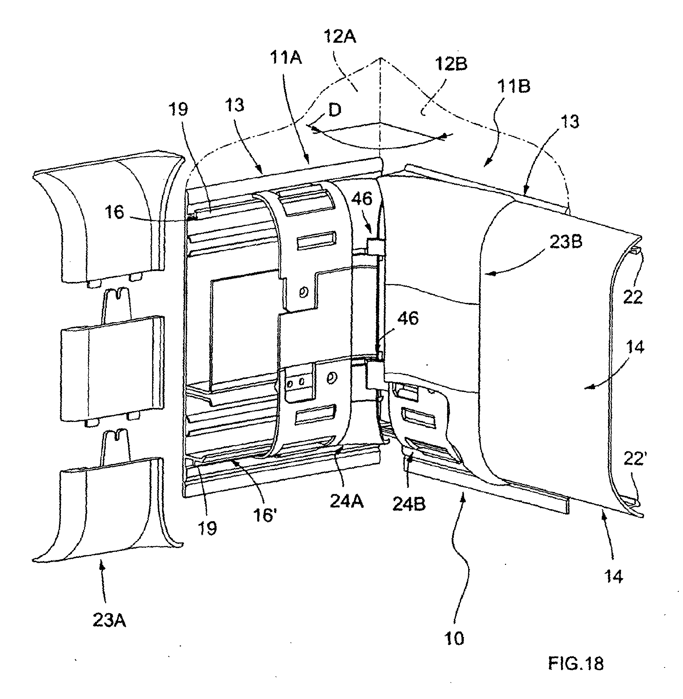

la figure 17 est une vue en perspective d'une autre de ces parties, également vue de l'arrière ;
la figure 18 est, avec un arrachement local, une vue en perspective, en partie éclatée, qui, analogue à celle de la figure 1, concerne un accessoire d'angle suivant l'invention, pour une forme de réalisation correspondant à un angle intérieur ;

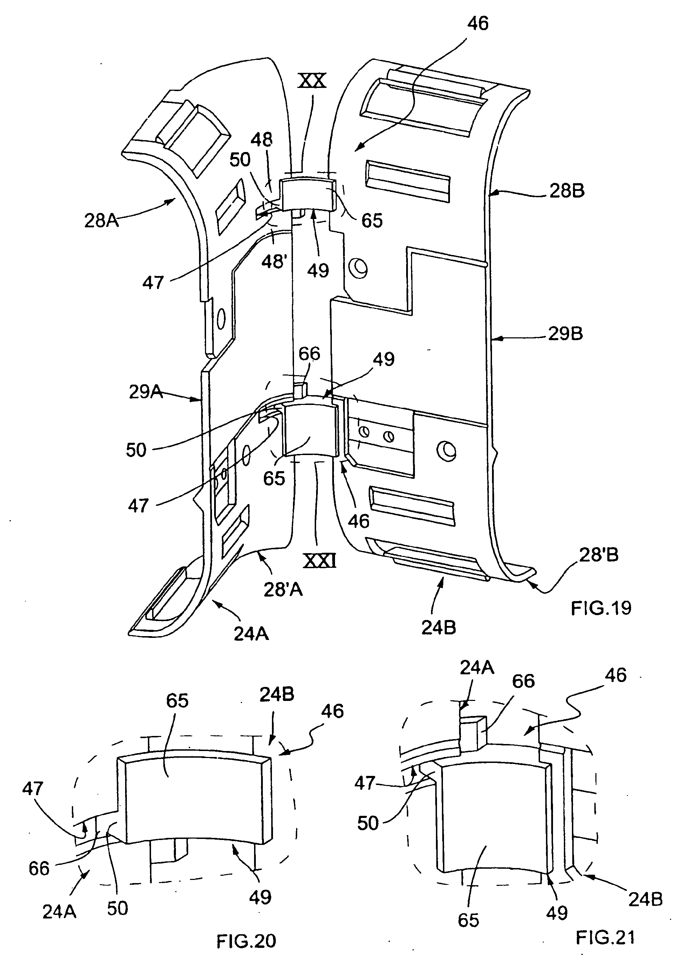

la figure 19 est, à échelle supérieure, une vue en perspective des deux supports que comporte cet accessoire d'angle, vus de l'avant ;
les figures 20 et 21 reprennent, à échelle supérieure, les détails de la figure 19 repérés par des encarts XX et XXI sur cette figure 19 ;

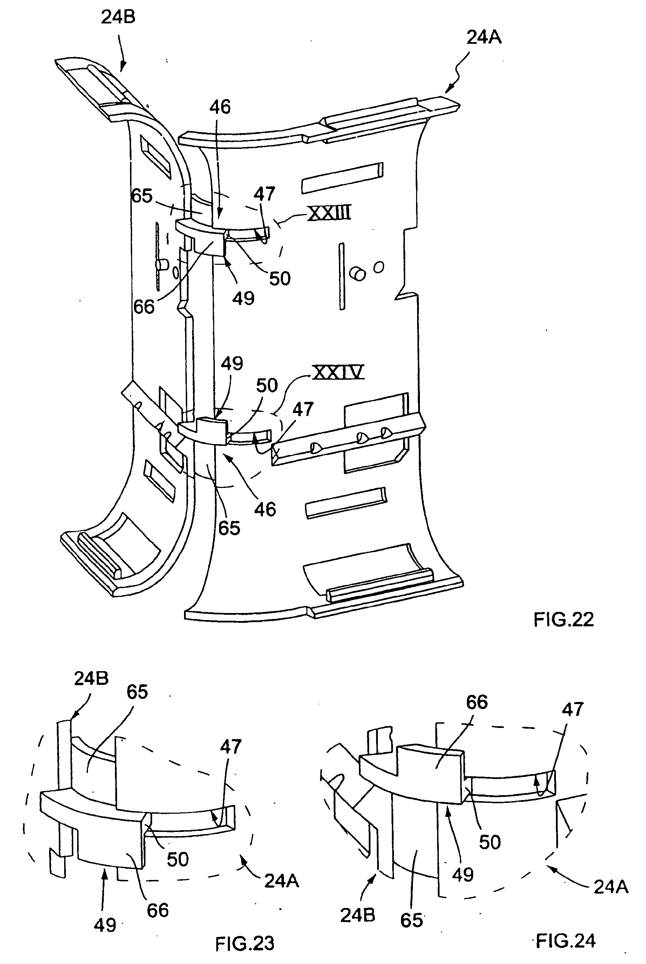

la figure 22 est une vue en perspective de ces mêmes supports, vus de l'arrière ;
les figures 23 et 24 reprennent, à échelle supérieure, les détails de la figure 22 repérés par des encarts XXIII et XXIV sur cette figure 22 ;

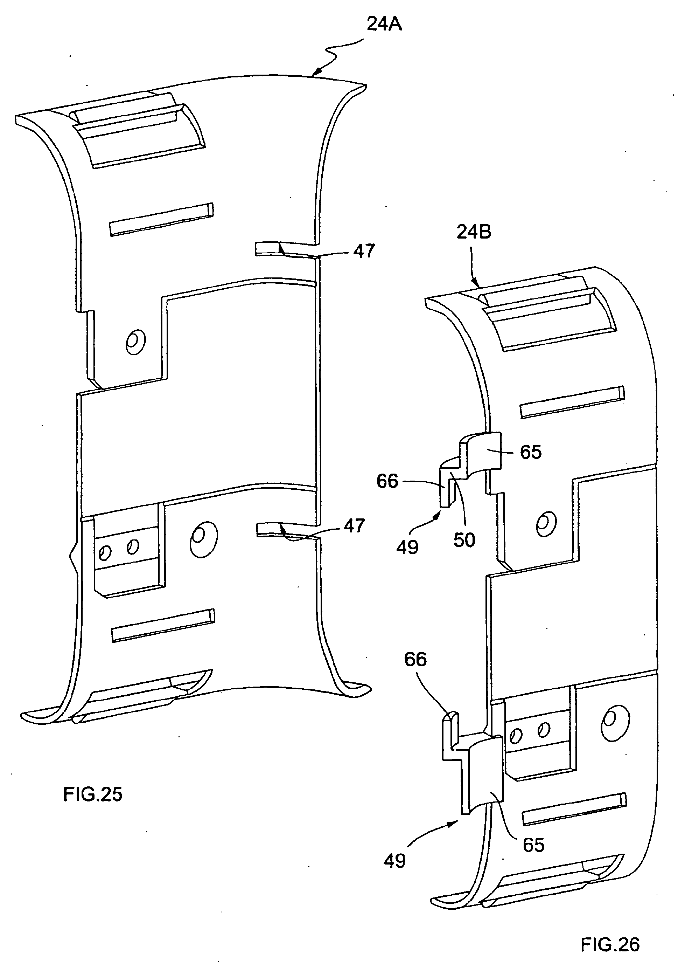

la figure 25 est une vue en perspective d'un de ces supports, vu de l'avant ;
la figure 26 est une vue en perspective de l'autre de ces supports, également vu de l'avant ;

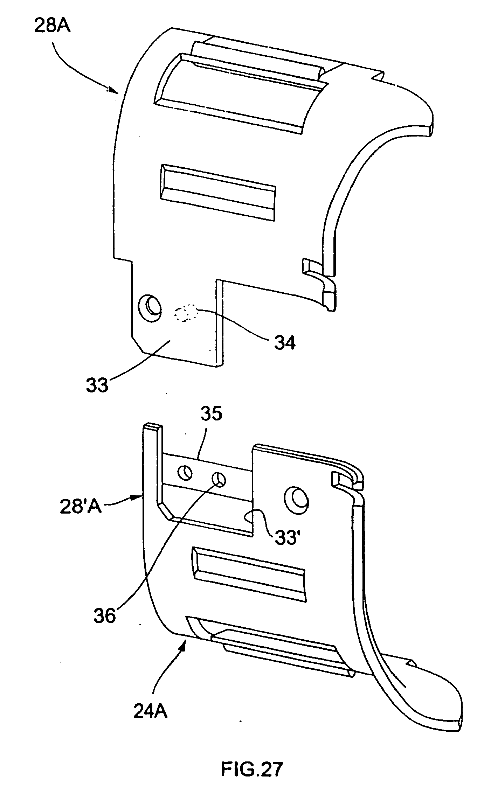

la figure 27 est une autre vue en perspective du support représenté sur la figure 25, après élimination de sa partie centrale.

Tel qu'illustré sur ces figures, et de manière connue en soi, l'accessoire d'angle 10 suivant l'invention constitue un accessoire de cheminement destiné à établir une continuité entre deux tronçons de goulotte 11A, 11B, qui cheminent chacun respectivement sur deux parois 12A 12B faisant un dièdre D entre elles, et qui comportent chacun, suivant globalement une même structure, un socle 13 et un couvercle 14.

Par exemple, et tel que représenté, les parois 12A, 12B sont des murs, et les tronçons de goulotte 11A, 11B courent en plinthe à leur base.

En pratique, l'angle du dièdre D que forment ces parois 12A, 12B est sensiblement droit, aux tolérances de construction près.

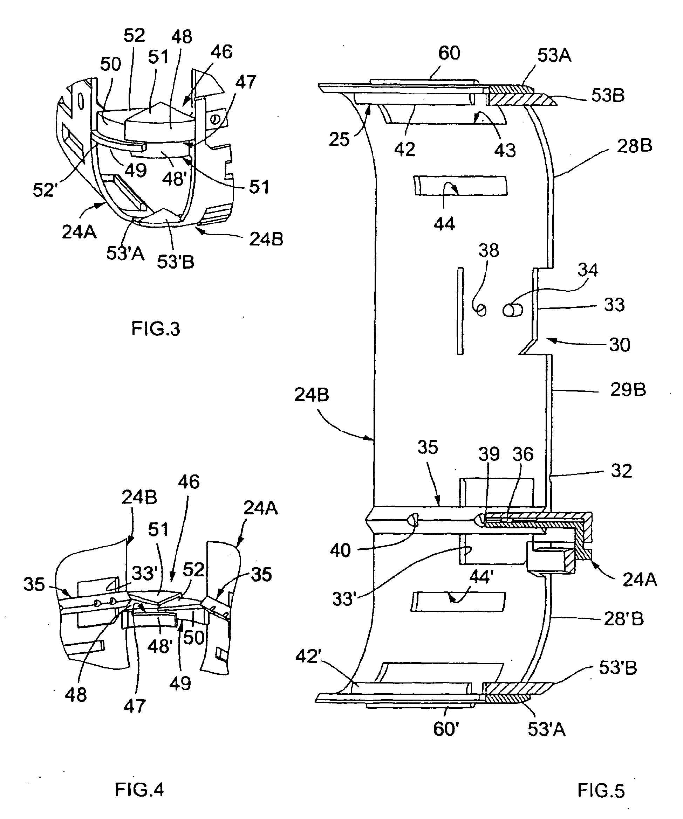

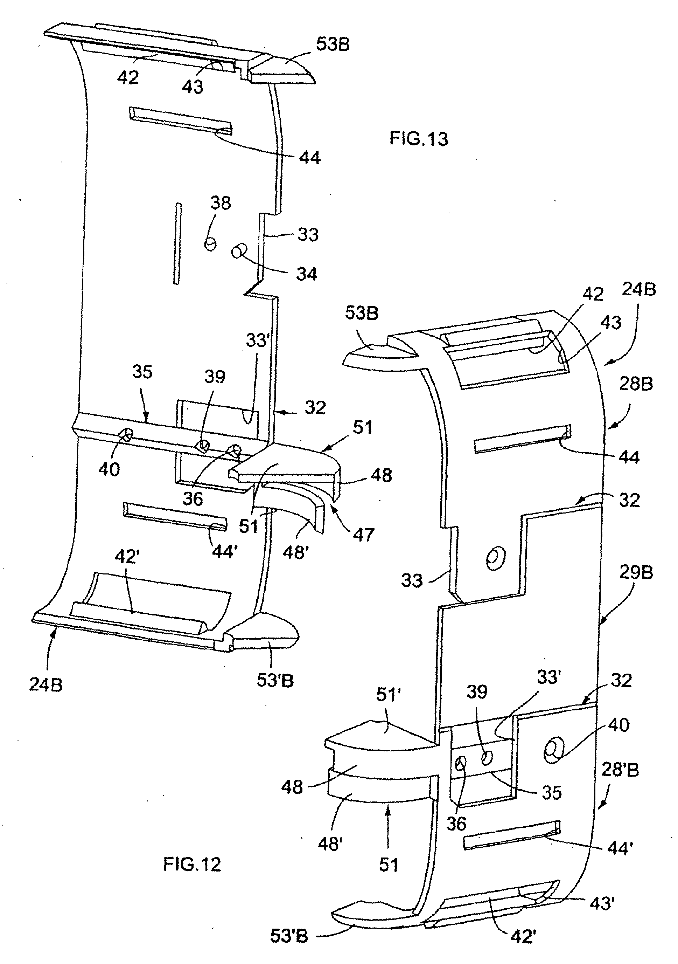

Dans la forme de réalisation représentée sur les figures 1 à 17, ce dièdre D est un dièdre saillant.

Le socle 13 et le couvercle 14 des tronçons de goulotte 11A, 11B ne relevant pas, par eux-mêmes, de la présente invention, ils ne seront pas décrits dans tous leurs détails ici.

S'agissant du socle 13, il suffira d'indiquer que, dans la forme de réalisation représentée, il comporte une semelle 15, par laquelle il est adapté à être appliqué à une paroi 12A, 12B et à être fixé à celle-ci, et, en saillie, longitudinalement, sur cette semelle 15, une pluralité de nervures 16, 16', 17 et 18.

Les nervures 16, 16', qui sont les nervures extrêmes, l'une supérieure, l'autre inférieure, et qui, dans la forme de réalisation représentée, sont de structure et de hauteur différentes, comportent, chacune, à leur dos, ainsi qu'il est mieux visible sur la figure 18, un retour en équerre 19, pour l'encliquetage du couvercle 14.

La nervure 17, qui est une nervure médiane, forme une cloison qui partage globalement en deux compartiments le volume interne des tronçons de goulotte 11A, 11B.

Dans la forme de réalisation représentée, de cette nervure 17 est issu, d'un seul tenant, d'un côté de celle-ci, un voile de séparation 20, qui s'étend sensiblement parallèlement à la semelle 15.

Les nervures 18, qui interviennent par paires de part et d'autre de la nervure 17, entre celle-ci et les nervures 16, 16', forment, chacune globalement, une rainure, par exemple pour l'arrimage d'un quelconque appareillage ou d'un quelconque accessoire, non représenté, ou pour la réception de vis, également non représentées.

S'agissant du couvercle 14 il suffira, corollairement, d'indiquer que, globalement concave, pour recouvrir la semelle 15, il présente, dans la forme de réalisation représentée, une partie médiane sensiblement plane et des parties latérales globalement cintrées, et que, ainsi qu'il est mieux visible sur la figure 18, il comporte, longitudinalement, en saillie sur sa surface intérieure, au voisinage de chacun de ses bords longitudinaux, mais en retrait par rapport à ceux-ci, une nervure 22, 22', qui, pour son encliquetage sur le retour en équerre 19 de la nervure 16, 16' correspondante du socle 13, est conformée en crochet.

De manière connue en soi, l'accessoire d'angle 10 suivant l'invention comporte un cache 23 propre à s'étendre entre les couvercles 14 des deux tronçons de goulotte 11A, 11B.

Suivant l'invention, cet accessoire d'angle 10 comporte, également, deux supports 24A, 24B, à raison d'un par tronçon de goulotte 11A, 11B, chacun de ces deux supports 24A, 24B présentant, suivant des dispositions décrites plus en détail ultérieurement, d'une part, des moyens d'assemblage 25 propres à permettre de le rapporter sur le socle 13 du tronçon de goulotte 11A, 11B correspondant, et, d'autre part, des moyens de réception 26 propres à permettre d'y assujettir le cache 23, et, conjointement, le cache 23 est lui-même dissocié en deux joues 23A, 23B distinctes, à raison d'une joue 23A, 23B par support 24A, 24B, et, donc, à raison d'une joue 23A, 23B par tronçon de goulotte 11A, 11B.

Dans les formes de réalisation représentées, les supports 24A, 24B ont, globalement, l'un et l'autre, des structures similaires, mais, ainsi qu'il apparaîtra ultérieurement, ils sont cependant différenciés.

En pratique, dans ces formes de réalisation, chacun des supports 24A, 24B comporte au moins trois parties 28A, 29A 28'A, 28B, 29B 28'B, qui, échelonnées sur sa longueur ou hauteur, c'est-à-dire suivant une direction transversale par rapport aux tronçons de goulotte 11A, 11B, sont susceptibles d'être désolidarisées les unes des autres, à savoir, deux parties latérales 28A, 28'A, 28B, 28'B, l'une supérieure, l'autre inférieure, et au moins une partie médiane 29A, 29B, et, entre les parties latérales 28A, 28'A, 28B, 28'B, il est prévu, suivant des dispositions décrites plus en détail ultérieurement, des moyens d'assemblage 30.

Par exemple, et tel que représenté, seule une partie médiane 29A, 29B est prévue pour chacun des supports 24A, 24B.

Dans les formes de réalisation représentées, les trois parties 28A, 29A, 28'A, 28B, 29B 28'B d'un support 24A, 24B sont reliées les unes aux autres par des zones de moindre résistance 32 frangibles.

Par exemple, et tel que représenté, ces zones de moindre résistance 32 sont matérialisées par des gorges présentes en creux sur la surface extérieure des supports 24A, 24B.

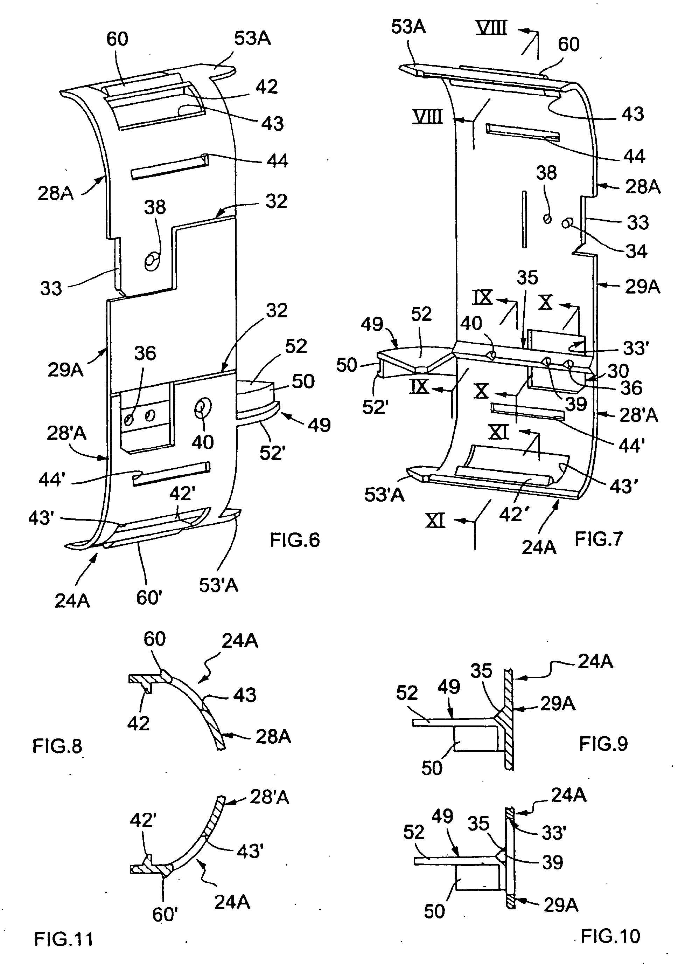

Dans les formes de réalisation représentées, les moyens d'assemblage 30 prévus entre les deux parties latérales 28A, 28'A, 28B, 28'B d'un support 24A, 24B comportent, d'une.,part, sur l'une de ces parties latérales 28A, 28'A, 28B, 28'B, en l'espèce la partie latérale 28A, 28B supérieure, au moins une patte 33, qui prolonge localement cette partie latérale 28A, 28B, et sur laquelle fait saillie, sur sa surface interne, sensiblement perpendiculairement à son épaisseur, au moins un pion 34, figure 5, et, d'autre part, sur l'autre de ces parties latérales 28A, 28'A, 28B, 28'B, et, donc, en l'espèce, la partie latérale 28'A, 28'B inférieure, au moins une encoche 33', qui est propre à recevoir la patte 33 de la partie latérale 28A, 28B précédente, et à la faveur de laquelle intervient une barrette 35 présentant au moins un évidement 36 propre à l'engagement du pion 34 correspondant.

Par exemple, et tel que représenté, seule une patte 33 est prévue sur la partie latérale 28A, 28B supérieure, et, en correspondance, la partie latérale 28'A 28'B inférieure ne comporte qu'une encoche 33'.

Du fait de la patte 33, la gorge matérialisant la zone de moindre résistance 32 qui intervient entre la partie latérale 28A, 28B supérieure et la partie médiane 29A, 29B s'étend en zigzag.

Par contre, la gorge matérialisant la zone de moindre résistance 32 qui s'étend entre la partie médiane 29A, 29B et la partie latérale 28'A, 28'B inférieure est rectiligne.

Dans les formes de réalisation représentées, la patte 33 ne comporte qu'un pion 34.

Mais, pour des raisons qui apparaîtront ci-après, elle comporte, également, à niveau avec ce pion 34, mais à distance de celui-ci, un perçage 38.

Corollairement, la barrette 35 forme une nervure qui, en saillie sur la surface interne de la partie latérale 28'A, 28'B inférieure, s'étend sur toute la largeur de celle-ci, en traversant, au passage, son encoche 33'.

En pratique, cette barrette 35 est sensiblement à niveau avec la nervure 17 médiane du socle 13 du tronçon de goulotte 11A, 11B correspondant, et, en section transversale, elle a un profil triangulaire.

Outre l'évidement 36, cette barrette 35 comporte, en correspondance avec le perçage 38 de la patte 33 de la partie latérale 28A, 28B supérieure, un perçage 39 propre à un vissage, c'est-à-dire au passage d'une vis.

La partie latérale 28'A, 28'B inférieure comporte, également, un perçage 40, qui, aligné avec l'évidement 36 et le perçage 39 de sa barrette 35, traverse de part en part, comme ceux-ci, sa barrette 35.

Comme le perçage 39, ce perçage 40 est propre à un vissage.

En pratique, les supports 24A, 24B ont, suivant leur hauteur, un profil globalement analogue au profil transversal des couvercles 14.

Leur partie médiane 29A, 29B, sensiblement plane, s'étend parallèlement à la semelle 15 des socles 13.

Quant à leurs parties latérales 28A, 28'A, 28B, 28'B, elles sont globalement cintrées, à la manière des parties latérales des couvercles 14.

Dans les formes de réalisation représentées, les bords longitudinaux des supports 24A, 24B, c'est-à-dire ceux de leurs bords qui s'étendent globalement transversalement par rapport aux socles 13 des tronçons de goulotte 11A, 11B. sont sensiblement parallèles l'un à l'autre.

Préférentiellement, et tel que représenté, les moyens d'assemblage 25 prévus entre un support 24A, 24B et le socle 13 du tronçon de goulotte 11A, 11B correspondant sont des moyens d'encliquetage.

Ils comportent, à la manière des nervures 22, 22' d'un couvercle 14, deux nervures 42, 42', qui font saillie sur la surface interne de leur partie latérale 28A, 28'A, 28B, 28'B, en s'étendant sur une fraction au moins de la largeur de celle-ci, et par lesquelles ils sont aptes à se crocheter sur le retour en équerre 19 des nervures 16, 16' du socle 13 du tronçon de goulotte 11A, 11B correspondant.

Dans les formes de réalisation représentées, ces nervures 42, 42' s'étendent en bordure d'une fenêtre 43, 43' ajourant localement les parties latérales 28A, 28'A, 28B, 28'B.

Dans les formes de réalisation représentées, les parties latérales 28A, 28'A, 28B, 28'B des supports 24A, 24B sont également ajourées, localement, pour des raisons qui apparaîtront ci-après, par une autre fenêtre 44, 44' qui, parallèle à la fenêtre 43, 43' précédente, s'étend à distance de celle-ci, entre cette fenêtre 43, 43' et la partie médiane 29A, 29B associée.

Par ailleurs, et ainsi qu'il apparaîtra également ultérieurement, les moyens d'assemblage 25 prévus entre un support 24A, 24B et le socle 13 du tronçon de goulotte 11A, 11B correspondant comportent au moins un perçage propre à un vissage.

Il s'agit du perçage 39 et/ou du perçage 40 que présente un tel support 24A, 24B.

Préférentiellement, et cela est le cas dans les formes de réalisation représentées, entre les deux supports 24A, 24B interviennent des moyens d'engagement 46 par lesquels ces deux supports 24A, 24B sont, au moins localement, en prise l'un avec l'autre.

Ces moyens d'engagement 46 comportent, d'une manière générale, dans les formes de réalisation représentées, d'une part, sur l'un des supports 24A, 24B, une fente 47, qui, allongée transversalement par rapport à ce support 24A, 24B, s'étend entre deux lèvres cintrées 48, 48', l'une supérieure, l'autre inférieure, et, d'autre part, en correspondance, sur l'autre de ces supports 24A, 24B, un appendice 49, qui, en saillie sur le bord longitudinal correspondant de ce support 24A 24B, prolonge localement ce dernier, en étant lui-même cintré à l'image des lèvres cintrées 48, 48' précédentes, et dont une portion d'engagement 50, au moins, est en prise avec la fente 47 formée par ces dernières, en sorte que ces moyens d'engagement 46 constituent au moins pour partie des moyens d'articulation.

S'agissant, comme plus particulièrement représenté sur les figures 1 à 17. d'un accessoire d'angle extérieur, la fente 47 appartient à un appendice 51, qui, en saillie sur le bord longitudinal correspondant du support 24A, 24B concerné, en l'espèce le support 24B, prolonge localement ce dernier.

Corollairement, l'appendice 49 appartient à l'autre support 24A, 24B, et, donc, en l'espèce, au support 24A.

Dans les formes de réalisation représentées, les lèvres cintrées 48, 48' de la fente 47 sont globalement axées sur un axe parallèle à l'arête du dièdre D, et il en est globalement de même pour l'appendice 49 correspondant.

Dans la forme de réalisation plus particulièrement représentée sur les figures 1 à 17, les lèvres cintrées 48, 48' de la fente 47 sont décalées l'une par rapport à l'autre suivant une direction orthogonale à cette arête.

En pratique, dans cette forme de réalisation, ces lèvres cintrées 48, 48' sont chacune formées par un flasque de forme générale cylindrique, et il en est de même pour la portion d'engagement 50 par laquelle l'appendice 49 associé est en prise avec la fente 47 qu'elles définissent.

Dans la forme de réalisation représentée, la lèvre cintrée 48 supérieure est raidie par un flasque 51 ', qui s'étend le long de son bord supérieur, sensiblement perpendiculairement à l'arête du dièdre D

De même, dans cette forme de réalisation, la portion d'engagement 50 de l'appendice 49 est raidie, le long de son bord supérieur, par un flasque 52, qui s'étend, lui aussi, sensiblement perpendiculairement à l'arête du dièdre D, sous le flasque 51' précédent, et, le long de son bord inférieur, par une barrette 52'.

Lorsque, comme représenté sur les figures 1 à 17, l'accessoire d'angle 10 est un accessoire d'angle extérieur, il n'y a une fente 47 et un appendice 49 qu'à un seul niveau sur la hauteur, ou longueur, des supports 24A, 24B.

Dans les formes de réalisation représentées, les moyens d'engagement 46 intervenant entre les deux supports 24A, 24B comportent, en outre, au moins deux consoles 53A, 53'A 53B, 53'B, qui, solidaires, chacune respectivement, de ces deux supports 24A, 24B, en faisant saillie transversalement sur leur bord longitudinal correspondant, se chevauchent au moins pour partie mutuellement, en étant sensiblement au contact l'une de l'autre, en sorte que ces moyens d'engagement 46 constituent au moins pour partie des moyens de positionnement.

En pratique, dans ces formes de réalisation, il y a des consoles 53A, 53'A, 53B, 53'B à au moins deux niveaux différents des supports 24A, 24B.

Par exemple, et tel que représenté, les consoles 53A, 53B, 53'A, 53'B interviennent aux extrémités des supports 24A, 24B, les consoles 53A, 53B à leur extrémité supérieure, et les consoles 53'A, 53'B à leur extrémité inférieure.

Dans la forme de réalisation représentée, les consoles 53A, 53'A de l'un des supports 24A, 24B, en l'espèce le support 24A, encadrent les consoles 53B, 53'B de l'autre de ces support 24A, 24B, en l'espèce le support 24B.

Dans les formes de réalisation représentées, chacune des joues 23A, 23B du cache 23 comporte au moins trois parties 54A, 55A, 54'A, 54B, 55B, 54'B, qui, échelonnées sur sa longueur ou hauteur, sont en prise les unes avec les autres par des moyens d'assemblage 56, à savoir deux parties latérales 54A, 54'A, 54B, 54'B et une partie médiane 55A, 55B.

Préférentiellement, et tel que représenté, les moyens d'assemblage 56 prévus entre les diverses parties 54A, 55A, 54'A, 54B, 55B, 54'B d'une joue 23A, 23B du cache 23 comportent des éléments d'emboîtement femelle 57 et mâle 57' qui interviennent parallèlement à l'épaisseur d'une telle joue 23A, 23B.

Plus précisément, les parties latérales 54A, 54'A, 54B, 54'B d'une joue 23A, 23B du cache 23 comportent, l'une, un élément d'emboîtement femelle 57, en forme de poche sans fond, et l'autre, un élément d'emboîtement mâle 57', en forme de patte, et la partie médiane 55A, 55B associée comporte, de manière complémentaire, un élément d'emboîtement mâle 57' sur l'un de ses bords transversaux, en l'espèce son bord transversal supérieur, et un élément d'emboîtement femelle 57 sur l'autre de ceux-ci, en l'espèce le bord transversal inférieur.

Pour son crochetage sur le bord libre 58 de la poche sans fond formant un élément d'emboîtement femelle 57, une patte formant un élément d'emboîtement mâle 57' comporte, en saillie sur sa surface interne, une nervure 58', figures 16 et 17.

En outre, pour un centrage relatif entre les parties 54A, 55A, 54'A, 54B, 55B, 54'B concernées, la patte formant un moyen d'emboîtement mâle 57' présente, en creux sur son bord libre, une encoche 59' par laquelle elle est apte à s'engager sur une nervure 59 prévue au-delà de la poche sans fond formant un élément d'emboîtement femelle 57.

Dans la forme de réalisation représentée, la partie médiane 55A, 55B des supports 24A, 24B est globalement cintrée suivant un seul sens de courbure, auquel correspondent des génératrices parallèles à l'arête du dièdre D.

En revanche, les parties latérales 54A, 54B, 54'A, 54'B de ces joues 23A, 23B sont cintrées suivant deux sens de courbure orthogonaux l'un par rapport à l'autre, l'un qui intervient sensiblement parallèlement à l'arête du dièdre D, l'autre qui intervient sensiblement perpendiculairement à cette arête.

Dans les formes de réalisation représentées, les moyens de réception 26 que comporte un support 24A, 24B pour l'assujettissement de la joue 23A, 23B correspondante du cache 23 sont des moyens d'encliquetage.

En pratique, dans ces formes de réalisation, ces moyens de réception 26 comportent des nervures 60, 60', qui font saillie sur la surface externe de leurs parties latérales 28A, 28B, 28'A, 28'B en bordure de leur fenêtre 43, 43', et, pour coopération en encliquetage avec ces nervures 60, 60', les parties latérales 54A, 54B, 54'A, 54'B des joues 23A, 23B comportent, elles-mêmes, en saillie sur leur surface interne, des nervures 61, 61'.

Préférentiellement, et cela est le cas dans les formes de réalisation représentées, il est enfin prévu, entre les joues 23A, 23B du cache 23 et les supports 24A, 24B correspondants, des moyens d'emboitement 62.

Par exemple, et tel que représenté, ces moyens d'emboitement 62 comportent des nervures 63, 63', qui font saillie sur la surface interne des parties latérales 54A, 54B, 54'A, 54'B des joues 23A, 23B du cache 23, et lesquelles celles-ci sont aptes à s'engager dans les fenêtres 44, 44' des parties latérales 28A, 28'A, 28B, 28'B des supports 24A, 24B.

Au montage, les supports 24A, 24B sont ainsi encliquetés sur les socles 13 des tronçons de goulotte 11A, 11B.

Le couvercle 14 de chacun des tronçons de goulotte 11A, 11B est alors tronçonné à une longueur inférieure à celle du socle 13 correspondant, de manière à ce que, après son encliquetage sur ce socle 13, il se situe dans le prolongement du support 24A, 24B déjà en place sur celui-ci, en venant par exemple en butée contre ce support 24A, 24B, comme représenté sur la figure 2.

Après assemblage de leurs parties 54A, 55A, 54'A, 54B, 55B, 54'B, les deux joues 23A, 23B du cache 23 sont à leur tour elles-mêmes chacune respectivement encliquetées sur les supports 24A, 24B.

Elles viennent alors se chevaucher l'une l'autre dans leur zone de jonction, la joue 23A, par exemple, recouvrant alors en pratique localement la joue 23B, et, conjointement, elles viennent chacune respectivement chevaucher le couvercle 14 des tronçons de goulotte 11A, 11B, en recouvrant localement l'extrémité correspondante de ce couvercle 14.

Ainsi qu'il est aisé de le comprendre, les moyens d'emboîtement 62 prévus entre les joues 23A, 23B du cache 23 et les supports 24A, 24B mis en oeuvre suivant l'invention permettent, avantageusement, de limiter, lors d'éventuels chocs mécaniques sur les joues 23A, 23B, le déplacement de ces joues 23A, 23B vis-à-vis des supports 24A, 24B, en sorte que ce déplacement reste en toute certitude inférieur à celui nécessaire à une désolidarisation des moyens de réception 26 intervenant par ailleurs entre elles et ces supports 24A, 24B.

Ainsi qu'il est aisé, également, de le comprendre, tout en contribuant au positionnement des supports 24A, 24B l'un par rapport à l'autre, les consoles 53A, 53B, 53'A, 53'B intervenant aux extrémités de ces supports 24A, 24B assurent avantageusement à leur niveau toute la continuité de protection souhaitable entre les tronçons de goulotte 11A, 11B, notamment à l'égard d'une pénétration d'un quelconque fil de diamètre réduit dans le volume interne de ceux-ci, comme le prévoient les dispositions normatives en la matière.

Si désiré, la fixation des supports 24A, 248 au socle 13 des tronçons de goulotte 11A, 11B, déjà assurée par les moyens d'assemblage 25 prévus à cet effet, en l'espèce des moyens d'encliquetage, peut être confortée par vissage, à la faveur du perçage 40 de la partie latérale 28'A, 28'B inférieure de ces supports 24A, 24B, et/ou du perçage 39 de leur barrette 35, la ou les vis correspondantes venant mordre, pour ce faire, dans la nervure 17 d'un tel socle 13.

Dans la forme de réalisation représentée sur les figures 18 à 26, le dièdre D formé par les parois 12A, 12B est un dièdre rentrant.

L'accessoire d'angle 10 suivant l'invention alors mis en oeuvre comporte, comme précédemment, un cache 23 dissocié en deux joues 23A, 23B distinctes, et, pour la fixation de ces joues 23A, 23B, deux supports 24A, 24B.

Les joues 23A, 23B du cache 23 ont, globalement, une même structure, en trois parties 54A, 54'A, 55A, 54B, 54'B, 55B, que les précédentes, avec, intervenant entre ces parties 54A, 54'A, 55A, 54B, 54'B, 55B, des moyens d'assemblage 56, à élément d'emboîtement femelle 57 et élément d'emboîtement mâle 57', de même type.

Ces joues 23A, 23B ne seront donc pas à nouveau décrites en détail ici.

Il suffira d'indiquer que leur configuration générale est simplement adaptée à celle d'un angle intérieur.

De même, les supports 24A, 24B ont, globalement, une structure, à trois parties 28A, 29A, 28'A, 28B, 29B, 28'B, similaire à celle des supports 24A, 24B précédemment décrits, avec, intervenant entre ces trois parties 28A, 29A, 28'A, 28B, 29B, 28'B des zones de moindre résistance 32 frangibles.

Ils ne seront donc pas non plus décrits dans tous leurs détails ici.

Il convient, cependant, d'indiquer, que, si le support 24B a une configuration semblable à celle du support 24B précédent, avec des bords longitudinaux sensiblement parallèles l'un à l'autre, il n'en est pas de même pour le support 24A, les bords longitudinaux de celui-ci s'étendant, dans ce cas, dans des plans qui font un dièdre entre eux, pour l'adaptation de l'ensemble à un dièdre D rentrant.

Comme précédemment, interviennent, entre les deux supports 24A, 24B, des moyens d'engagement 46 par lesquels ces deux supports 24A, 24B sont, au moins localement, en prise l'un avec l'autre.

Comme précédemment, également, ces moyens d'engagement 46 comportent, d'une part, sur l'un de ces supports 24A, 24B, une fente 47, qui, allongée transversalement par rapport à ce support 24A, 24B, s'étend entre deux lèvres cintrées 48, 48', l'une supérieure, l'autre inférieure, et, d'autre part, en correspondance, sur l'autre de ces supports 24A, 24B, un appendice 49, qui, en saillie sur le bord longitudinal de ce support 24A, 24B, prolonge localement ce dernier, en étant lui-même cintré à l'image des lèvres cintrées 48, 48' précédentes, et dont une portion d'engagement 50, au moins, est en prise avec la fente 47 formée par ces dernières, en sorte que ces moyens d'engagement 46 constituent au moins pour partie des moyens d'articulation.

Mais, s'agissant d'un accessoire d'angle intérieur, la fente 47 affecte en pleine surface le support 24A, 24B concerné, en l'espèce le support 24A, à partir du bord longitudinal correspondant de celui-ci.

Conjointement, l'appendice 49 associé appartient à l'autre support 24A, 24B, en l'espèce le support 24B.

Dans la forme de réalisation représentée, la portion d'engagement 50 de cet appendice 49 est une barrette cintrée assurant transversalement une jonction entre deux flasques 65, 66, qui sont l'un et l'autre de forme générale cylindrique, et qui sont décalés l'un par rapport à l'autre, sensiblement perpendiculairement à l'arête du dièdre D, à savoir, un flasque 65 avant, par lequel l'appendice 49 s'engage de l'avant sur l'une des lèvres cintrées 48, 48' de la fente 47, en recouvrant localement cette lèvre cintrée 48, 48', et un flasque 66 arrière, par lequel cet appendice 49 s'engage de l'arrière sur l'autre de ces lèvres cintrées 48, 48', en recouvrant également localement cette lèvre centrée 48, 48'.

En pratique, ces flasques 65, 66 sont dirigés en sens opposés l'un par rapport à l'autre.

En pratique, également, il y a, ainsi, une fente 47 et un appendice 49 à au moins deux niveaux différents des supports 24A, 24B.

Par exemple, et tel que représenté, seules deux fentes 47 sont prévues sur le support 24A, et elles affectent chacune respectivement les deux parties latérales 28A, 28'A de celui-ci, et, en correspondance, seuls deux appendices 49 sont prévus sur le support 24B, et ils font chacun respectivement saillie sur les deux parties latérales 28B, 28'B de celui-ci.

Mais, d'un appendice 49 à l'autre, les flasques 65 sont dirigés en sens opposés, et il en est de même pour les flasques 66.

Enfin, s'agissant d'un accessoire d'angle intérieur, aucune console n'est prévue aux extrémités des supports 24A, 24B.

Pour le reste, les dispositions sont de même type que celles précédemment décrites.

De même, la mise en place se fait comme précédemment indiqué.

Dans ce qui précède, il a été supposée que, leur longueur ou hauteur correspondant à la largeur du socle 13 des tronçons de goulotte 11A, 11B, les supports 24A, 24B étaient mis en oeuvre à pleine longueur ou hauteur, et qu'il en était donc de même pour les joues 23A, 23B du cache 23.

La longueur ou hauteur des supports 24A, 24B peut cependant être réduite, pour leur adaptation à des tronçons de goulotte 11A, 11B dont le socle 13 a lui-même, en correspondance, une largeur réduite.

Il suffit, pour ce faire, comme représenté pour un support 24A sur la figure 27, d'éliminer la partie médiane 29A, 29B de ces supports 24A, 24B, par rupture au niveau de leur zone de moindre résistance 32, et d'abouter directement leur partie latérale 28A, 28'A, 28B, 28'B, à la faveur des moyens d'assemblage 30, à patte 33 et encoche 33', prévus à cet effet, le pion 34 de la patte 33 venant conjointement s'engager dans l'évidement 36 prévu pour lui sur la barrette 35 intervenant à la faveur de l'encoche 33'.

Sur la figure 27, le support 24A est du type de celui décrit en référence aux figures 18 à 26.

Il va de soi, qu'en variante, il pourrait s'agir de celui décrit en référence aux figures 1 à 17.

La présente invention ne se limite d'ailleurs pas aux formes de réalisation décrites et représentées, mais englobe toute variante d'exécution et/ou de combinaison de leurs divers éléments.

## Revendications

1. Accessoire d'angle pour goulotte, c'est-à-dire accessoire de cheminement destiné à établir une continuité entre deux tronçons de goulotte (11A, 11B) cheminant chacun respectivement sur deux parois (12A, 12B) faisant un dièdre (D) entre elles et comportant chacun un socle (13) et un couvercle (14), cet accessoire d'angle étant du genre comportant un cache (23) propre à s'étendre entre les couvercles (14) des deux tronçons de goulotte (11A, 11B), et étant **caractérisé en ce qu'**il comporte deux supports (24A, 24B), à raison d'un par tronçon de goulotte (11A, 11B), chacun de ces deux supports (24A, 24B) présentant, d'une part, des moyens d'assemblage (25) propres à permettre de le rapporter sur le socle (13) du tronçon de goulotte (11A, 11B) correspondant, et, d'autre part, des moyens de réception (26) propres à permettre d'y assujettir le cache (23), **en ce que**, conjointement, le cache (23) est dissocié en deux joues (23A, 23B) distinctes, à raison d'une joue (23A,23B) par support (24A, 24B), et, donc, à raison d'une joue (23A, 23B) par tronçon de goulotte (11A,11B), et **en ce que**, entre les deux supports (24A, 24B), interviennent des moyens d'articulation ou de positionnement (46) par lesquels ces deux supports (24A, 24B) sont, au moins localement, en prise l'un avec l'autre.

2. Accessoire d'angle suivant la revendication 1, **caractérisé en ce que** les moyens d'articulation ou de positionnement (46) intervenant entre les deux supports (24A, 24B) comportent, d'une part, sur l'un de ces supports (24A, 24B), une fente (47), qui allongée transversalement par rapport à ce support (24A, 24B), s'étend entre deux lèvres cintrées (48, 48'), et, d'autre part, en correspondance, sur l'autre de ces supports (24A, 24B), un appendice (49), qui, en saillie sur le bord longitudinal correspondant de ce support (24A, 24B), prolonge localement ce dernier, en étant lui-même cintré à l'image des lèvres cintrées (48, 48') précédentes, et dont une portion d'engagement (50), au moins, est en prise avec la fente (47) formée par ces dernières, en sorte que les moyens (46) constituent au moins pour partie des moyens d'articulation.

3. Accessoire d'angle suivant la revendication 2, **caractérisé en ce que**, s'agissant d'un accessoire d'angle intérieur, la fente (47) affecte en pleine surface le support (24A) concerné, à partir du bord longitudinal correspondant de celui-ci. 3

4. Accessoire d'angle suivant la revendication 3, **caractérisé en ce que** la portion d'engagement (50) de l'appendice (49) de l'autre support (24B) est une barrette cintrée assurant transversalement une jonction entre deux flasques (65, 66) décalés l'un par rapport à l'autre, à savoir, un flasque (65) avant, par lequel cet appendice (49) s'engage de l'avant sur l'une des lèvres cintrées (48, 48') de la fente (47), et un flasque (66) arrière, par lequel cet appendice (49) s'engage de l'arrière sur l'autre de ces lèvres: cintrées (48, 48').

5. Accessoire d'angle suivant la revendication 2, **caractérisé en ce que**, s'agissant d'un accessoire d'angle extérieur, la fente (47) appartient à un appendice (51), qui, en saillie sur le bord longitudinal correspondant du support (24B) concerné, prolonge localement ce dernier.

6. Accessoire d'angle suivant la revendication 5, **caractérisé en ce que** les lèvres cintrées (48, 48') sont décalées l'une par rapport à l'autre.

7. Accessoire d'angle suivant la revendication 6, **caractérisé en ce que**, les lèvres cintrées (48, 48') sont chacune formées par un flasque de forme générale cylindrique, et il en est de même pour la portion d'engagement (50) par laquelle l'appendice (49) associé est en prise avec la fente (47) qu'elles définissent.

8. Accessoire:d'angle suivant l'une quelconque des revendications 2 à 7, **caractérisé en ce que** les lèvres cintrées (48, 48') de la fente (47) sont globalement axées sur un axe parallèle à l'arête du dièdre (D), et il en est globalement de même pour l'appendice (49) correspondant.

9. Accessoire d'angle suivant l'une quelconque des revendications 2 à 8, **caractérisé en ce qu'**il y a une fente (47) et un appendice (49) à au moins deux niveaux différents des supports (24A, 24B).

10. Accessoire d'angle suivant l'une quelconque des revendications 1 à 9, **caractérisé en ce que** les moyens d'articulation ou de positionnement (46) intervenant entre les deux supports (24A, 24B) comportent au moins deux consoles (53A, 53'A, 53B, 53'B) qui, solidaires, chacune respectivement, de ces deux supports (24A, 24B), en faisant saillie transversalement sur leur bord longitudinal correspondant, se chevauchent au moins pour partie mutuellement, en étant sensiblement au contact l'une de l'autre, en sorte que ces moyens (46) constituent au moins pour partie des moyens de positionnement.

11. Accessoire d'angle suivant la revendication 10, **caractérisé en ce qu'**il y a des consoles (53A, 53'A, 53B, 53'B) à au moins deux niveaux différents des supports (24A, 24B).

12. Accessoire d'angle suivant la revendication 11, **caractérisé en ce que** les consoles (53A, 53'A, 53B, 53'B) interviennent aux extrémités des supports (24A, 24B).

13. Accessoire d'angle suivant l'une quelconque des revendications 11, 12, **caractérisé en ce que** les consoles (53A, 53'A) de l'un des supports (24A, 24B) encadrent les consoles (53B, 53'B) de l'autre de ces supports (24A, 24B).

14. Accessoire d'angle suivant l'une quelconque des revendications 1 à 13, **caractérisé en ce que** les moyens d'assemblage (25) prévus entre un support (24A, 24B) et le socle (13) du tronçon de goulotte (11A, 11B) correspondant sont des moyens d'encliquetage.

15. Accessoire d'angle suivant l'une quelconque des revendications 1 à 14, **caractérisé en ce que** les moyens d'assemblage (25) prévus entre un support (24A, 24B) et le socle (13) du tronçon de goulotte (11A, 11B) correspondant comportent au moins un perçage (39, 40) propre à un vissage.

16. Accessoire d'angle suivant l'une quelconque des revendications 1 à 15, **caractérisé en ce** chacun des supports (24A, 24B) comporte au moins trois parties (28A, 29A, 28'A, 28B, 29B, 28'B,) qui, échelonnées sur sa longueur ou hauteur, sont susceptibles d'être désolidarisées les unes des autres, à savoir deux parties latérales (28A, 28'A, 28B, 28'B) et au moins une partie médiane (29A, 29B), et, entre les parties latérales (28A, 28'A, 288, 28' B), il est prévu des moyens d'assemblage (30).

17. Accessoire d'angle suivant la revendication 16, **caractérisé en ce que** les moyens d'assemblage (30) prévus entre les deux parties latérales (28A, 28'A, 28B, 28'B) d'un support (24A, 24B) comportent, d'une part, sur l'une de ces parties latérales (28A, 28'A, 28B, 28'B), au moins une patte (33), qui prolonge localement cette partie latérale (28A, 28B), et sur laquelle fait saillie, sensiblement perpendiculairement à son épaisseur, au moins un pion (34), et, d'autre part, sur l'autre de ces parties latérales (28'A, 28'B), au moins une encoche (33'), qui est propre à recevoir la patte (33) de la partie latérale (28A, 28B) précédente, et à la faveur de laquelle intervient une barrette (35) présentant au moins un évidement (36) propre à l'engagement du pion (34) correspondant.

18. Accessoire d'angle suivant l'une quelconque des revendications 16, 17, **caractérisé en ce que** les trois parties (28A, 29A 28'A, 28B, 29B, 28'B) d'un support (24A, 24B) sont reliées les unes aux autres par des zones de moindre résistance (32) frangibles.

19. Accessoire d'angle suivant l'une quelconque des revendications 1 à 18, **caractérisé en ce que** les moyens de réception (26) que comporte un support (24A, 24B) pour l'assujettissement de la joue (23A, 23B) correspondante du cache (23) sont des moyens d'encliquetage.

20. Accessoire d'angle suivant l'une quelconque des revendications 1 à 19, **caractérisé en ce que** chacune des joues (23A, 23B) du cache (23) comporte au moins trois parties (54A, 55A, 54'A, 54B, 55B, 54'B), qui, échelonnées sur sa longueur ou hauteur, sont en prises les unes avec les autres par des moyens d'assemblage (56), à savoir deux parties latérales (54A, 54'A, 54B, 54'B) et une partie médiane (55A, 55B).

21. Accessoire d'angle suivant la revendication 20, **caractérisé en ce que** les moyens d'assemblage (56) prévus entre les diverses parties (54A, 55A, 54'A, 54B, 55B, 54'B) d'une joue (23A, 23B) du cache (23) comportent des éléments d'emboîtement femelle (57) et mâle (57') qui interviennent parallèlement à l'épaisseur d'une telle joue (23A, 23B).

22. Accessoire d'angle suivant la revendication 21, **caractérisé en ce que** les parties latérales (54A, 54'A, 54B, 54'B) d'une joue (23A, 23B) du cache (23) comportent, l'une, un élément d'emboîtement femelle (57), et, l'autre, un élément d'emboîtement mâle (57'), et la partie médiane (55A, 55B) associée comporte, de manière complémentaire, un élément d'emboîtement mâle (57') sur l'un de ses bords transversaux et un élément d'emboîtement femelle (57) sur l'autre de ceux-ci.

23. Accessoire d'angle suivant l'une quelconque des revendications 1 à 22, **caractérisé en ce qu'**il est prévu, entre les joues (23A, 23B) du cache (23) et les supports (24A, 24B) correspondants, des moyens d'emboîtement (62).

## Claims

1. Angle accessory for a conduit, that is to say a routing accessory intended to establish a continuity between two conduit sections (11A, 11B) each one respectively running over one of two surfaces (12A, 12B) forming a dihedral (D) between them and each comprising a base (13) and a cover (14), this angle accessory being of the type comprising a mask (23) capable of extending between the covers (14) of the two conduit sections (11A, 11B) and being **characterised in that** it comprises two supports (24A, 24B), one for each conduit section (11A, 11B), each of these two supports (24A, 24B) having, on the one hand, assembly means (25) capable of allowing it to be mounted on the base (13) of the corresponding conduit section (11A, 11B) and, on the other hand, receiving means (26) capable of allowing the mask (23) to be attached therein, and **in that**, in conjunction, the mask (23) is divided into two separate side walls (23A, 23B), one side wall (23A, 23B) for each support (24A, 24B), and therefore one side wall (23A, 23B) for each conduit section (11A, 11B), and **in that**, between the two supports (24A, 24B) there are articulation or positioning means (46) by which these two supports (24A, 24B) are, at least locally, engaged with one another.

2. Angle accessory according to claim 1, **characterised in that** the articulation or positioning means (46) between the two supports (24A, 24B) comprise, on the one hand, on one of the supports (24A, 24B), a slot (47) which, running transversely with respect to that support (24A, 24B), extends between two curved lips (48, 48'), and, on the other hand, in correspondence, on the other of these supports (24A, 24B), an appendage (49) which, protruding from the corresponding longitudinal edge of this support (24A, 24B), locally extends the latter, itself being curved like the preceding curved lips (48, 48'), and of which at least an engagement portion (50) is engaged with the slot (47) formed by the latter, such that the means (46) at least partly constitute articulation means.

3. Angle accessory according to claim 2, **characterised in that**, as it is an interior angle accessory, the slot (47) is on the open surface of the support (24A) in question, starting from the corresponding longitudinal edge of the latter.

4. Angle accessory according to claim 3, **characterised in that** the engagement portion (50) of the appendage (49) of the other support (24B) is a curved bar transversely providing a junction between two flanges (65, 66) which are offset with respect to each other, namely a front flange (65), by which this appendage (49) engages from the front on one of the curved lips (48, 48') of the slot (47) and a rear flange (66) by which this appendage (49) engages from the rear on the other one of these curved lips (48, 48').

5. Angle accessory according to claim 2, **characterised in that**, as it is an exterior angle accessory, the slot (47) is part of an appendage (51) which, protruding from the corresponding longitudinal edge of the support (24B) in question, locally extends the latter.

6. Angle accessory according to claim 5, **characterised in that** the curved lips (48, 48') are offset with respect to each other.

7. Angle accessory according to claim 6, **characterised in that** the curved lips (48, 48') are each formed by a flange of generally cylindrical shape and that the same thing applies to the engagement portion (50) by which the associated appendage (49) is engaged with the slot (47) that they define.

8. Angle accessory according to any one of claims 2 to 7, **characterised in that** the curved lips (48, 48') of the slot (47) are globally centred on an axis parallel with the edge of the dihedral (D) and that the same thing globally applies to the corresponding appendage (49).

9. Angle accessory according to any one of claims 2 to 8, **characterised in that** there is a slot (47) and an appendage (49) at at least two different levels of the supports (24A, 24B).

10. Angle accessory according to any one of claims 1 to 9, **characterised in that** the articulation or positioning means (46) which are located between the two supports (24A, 24B) comprise at least two brackets (53A, 53'A, 53B, 53'B) which, each one being integral with one of these two supports (24A, 24B) respectively, and transversely protruding from their corresponding longitudinal edge, mutually overlap at least partially, whilst being substantially in contact with one another, such that these means (46) at least partly constitute positioning means.

11. Angle accessory according to claim 10, **characterised in that** there are brackets (53A, 53'A, 53B, 53'B) at at least two different levels of the supports (24A, 24B).

12. Angle accessory according to claim 11, **characterised in that** the brackets (53A, 53'A, 53B, 53'B) are at the ends of the supports (24A, 24B).

13. Angle accessory according to any one of claims 11 and 12, **characterised in that** the brackets (53A, 53'A) of one of the supports (24A, 24B) fit around the brackets (53B, 53'B) of the other one of these supports (24A, 24B).

14. Angle accessory according to any one of claims 1 to 13, **characterised in that** the assembly means (25) provided between a support (24A, 24B) and the base (13) of the corresponding conduit section (11A, 11B) are click engagement means.

15. Angle accessory according to any one of claims 1 to 14, **characterised in that** the assembly means (25) provided between a support (24A, 24B) and the base (13) of the corresponding conduit section (11A, 11B) comprise at least one piercing (39, 40) suitable for screwing.

16. Angle accessory according to any one of claims 1 to 15, **characterised in that** each of the supports (24A, 24B) comprises at least three sections (28A, 29A, 28'A, 28B, 29B, 28'B) which, distributed over its length or height, are capable of being separated from one another, namely two lateral sections (28A, 28'A, 28B, 28'B) and at least one central section (29A, 29B) and assembly means (30) are provided between the lateral sections (28A, 28'A, 28B, 28'B).

17. Angle accessory according to claim 16, **characterised in that** the assembly means (30) provided between the two lateral sections (28A, 28'A, 28B, 28'B) of a support (24A, 24B) comprise, on the one hand, on one of these lateral sections (28A, 28'A, 28B, 28'B), at least one lug (33), which locally extends this lateral section (28A, 28B) and upon which protrudes, substantially perpendicular to its thickness, at least one pin (34), and, on the other hand, on the other one of these lateral sections (28'A, 28'B), at least one notch (33') which is capable of receiving the lug (33) of the preceding lateral section (28A, 28B), and this being assisted by a bar (35) having at least one opening (36) capable of being engaged by the corresponding pin (34).

18. Angle accessory according to any one of claims 16 or 17, **characterised in that** the three sections (28A, 29A, 28'A, 28B, 29B, 28'B) of a support (24A, 24B) are connected to each other by weak frangible zones (32).

19. Angle accessory according to any one of claims 1 to 18, **characterised in that** the receiving means (26) which a support (24A, 24B) has for the attachment of the corresponding side wall (23A, 23B) of the mask (23) are click engagement means.

20. Angle accessory according to any one of claims 1 to 19, **characterised in that** each of the side walls (23A, 23B) of the mask (23) comprises at least three sections (54A, 55A, 54'A, 54B, 55B, 54'B), which, being distributed along its length or its height, are engaged with each other by assembly means (56), namely two lateral sections (54A, 54'A, 54B, 54'B) and one central section (55A, 55B).

21. Angle accessory according to claim 20, **characterised in that** the assembly means (56) provided between the various sections (54A, 55A, 54'A, 54B, 55B, 54'B) of a side wall (23A, 23B) of the mask (23) comprise female (57) and male (57') interlocking elements which operate parallel with the thickness of such a side wall (23A, 23B).

22. Angle accessory according to claim 21, **characterised in that** the lateral sections (54A, 54'A, 54B, 54'B) of a side wall (23A, 23B) of the mask (23) comprise, in one case, a female interlocking element (57), and, in the other case, a male interlocking element (57'), and the associated central section (55A, 55B) comprises, in a complementary manner, a male interlocking element (57') on one of its transverse edges and a female interlocking element (57) of the other one of them.

23. Angle accessory according to any one of claims 1 to 22, **characterised in that** interlocking means (62) are provided between the side walls (23A, 23B) of the mask (23) and the corresponding supports (24A, 24B).

## Patentansprüche

1. Winkelzubehör für Kabelkanal, das heißt Verlegungszubehör, das dazu bestimmt ist, einen kontinuierlichen Verlauf zwischen zwei Kabelkanalabschnitten (11A, 11B) herzustellen, die jeweils an zwei Wänden (12A, 12B) verlegt sind und hierbei miteinander einen Dieder (D) bilden und jeweils einen Sockel (13) und einen Deckel (14) aufweisen, wobei das Winkelzubehör mit einer Abdeckung (23) ausgeführt ist, die zwischen den Deckeln (14) der beiden Kabelkanalabschnitte (11A, 11B) zu verlaufen vermag, und **dadurch gekennzeichnet ist, dass** es zwei Halterungen (24A, 24B) umfasst, eine pro Kabelkanalabschnitt (11A, 11B), wobei jede der beiden Halterungen (24A, 24B) einerseits Verbindungsmittel (25) umfasst, die geeignet sind, deren Aufstecken auf den Sockel (13) des entsprechenden Kabelkanalabschnitts (11A, 11B) zu ermöglichen, und andererseits Aufnahmemittel (26) aufweist, die dazu geeignet sind, das Befestigen der Abdeckung (23) dort zu ermöglichen, dass zugleich die Abdeckung (23) in zwei separate Seitenwände (23A, 23) aufgeteilt ist, eine Seitenwand (23A, 23B) pro Halterung (24A, 24B) und somit eine Seitenwand (23A, 23B) pro Kabelkanalabschnitt (11A, 11B), und dass zwischen den beiden Halterungen (24A, 24B) Gelenk- bzw. Positionierungsmittel (46) angeordnet sind, durch welche die beiden Halterungen (24A, 24B) wenigstens lokal miteinander in Eingriff sind.

2. Winkelzubehör nach Anspruch 1,
**dadurch gekennzeichnet, dass** die zwischen den beiden Halterungen (24A, 24B) angeordneten Gelenk- bzw. Positionierungsmittel (46) einerseits an einer der Halterungen (24A, 24B) einen Schlitz (47) aufweisen, der bezüglich dieser Halterung (24A, 24B) in Querrichtung lang gestreckt zwischen zwei bogenförmigen Lippen (48, 48') verläuft, und andererseits an der anderen Halterung (24A, 24B) übereinstimmend einen Ansatz (49) umfasst, der an dem entsprechenden Längsrand der Halterung (24A, 24B) vorstehend Letztere lokal verlängert, wobei dieser so wie die vorstehend genannten bogenförmigen Lippen (48, 48') seinerseits bogenförmig ist, und von dem ein Eingriffsstück (50) wenigstens mit dem von diesen gebildeten Schlitz (47) in Eingriff ist, so dass die Mittel (46) wenigstens teilweise Gelenkmittel bilden.

3. Winkelzubehör nach Anspruch 2,
**dadurch gekennzeichnet, dass** der Schlitz (47) an der betreffenden Halterung (24A), ausgehend von deren entsprechendem Längsrand, mitten in der Oberfläche angeordnet ist, sofern es sich um ein Zubehör für Innenwinkel handelt.

4. Winkelzubehör nach Anspruch 3,
**dadurch gekennzeichnet, dass** das Eingriffsstück (50) des Ansatzes (49) der anderen Halterung (24B) ein bogenförmiger Steg ist, der quer eine Verbindung zwischen zwei bezüglich einander versetzten Wangen (65, 66) gewährleistet, das heißt eine vordere Wange (65), durch die der Ansatz (49) von vorne an einer der bogenförmigen Lippen (48, 48') des Schlitzes (47) eingreift, und einer hinteren Wange (66), durch die der Ansatz (49) von hinten an der anderen bogenförmigen Lippe (48, 48') eingreift.

5. Winkelzubehör nach Anspruch 2,
**dadurch gekennzeichnet, dass** der Schlitz (47) einem Ansatz (51) zugehörig ist, der an dem entsprechenden Längsrand der betreffenden Halterung (24B) vorstehend Letztere lokal verlängert, sofern es sich um ein Zubehör für Außenwinkel handelt.

6. Winkelzubehör nach Anspruch 5,
**dadurch gekennzeichnet, dass** die bogenförmigen Lippen (48, 48') bezüglich einander versetzt sind.

7. Winkelzubehör nach Anspruch 6,
**dadurch gekennzeichnet, dass** die bogenförmigen Lippen (48, 48') jeweils durch eine Wange mit allgemein zylindrischer Form gebildet sind, und Gleiches für das Eingriffsstück (50) gilt, durch das der zugeordnete Ansatz (49) mit dem Schlitz (47) in Eingriff ist, der durch diese gebildet wird.

8. Winkelzubehör nach einem der Ansprüche 2 bis 7,
**dadurch gekennzeichnet, dass** die bogenförmigen Lippen (48, 48') des Schlitzes (47) allgemein auf eine zu der Kante des Dieders (D) parallelen Achse ausgerichtet sind, und allgemein Gleiches für den entsprechenden Ansatz (49) gilt.

9. Winkelzubehör nach einem der Ansprüche 2 bis 8,
**dadurch gekennzeichnet, dass** ein Schlitz (47) und ein Ansatz (49) in wenigstens zwei verschiedenen Höhen der Halterungen (24A, 24B) vorhanden sind.

10. Winkelzubehör nach einem der Ansprüche 1 bis 9,
**dadurch gekennzeichnet, dass** die zwischen zwei Halterungen (24A, 24B) angeordneten Gelenk- bzw. Positionierungsmittel (46) wenigstens zwei Auskragungen (53A, 53'A, 53B, 53'B) aufweisen, die, jede jeweils mit den beiden Halterungen (24A, 24B) fest verbunden und an dem entsprechenden Längsrand quer vorstehend, sich wenigstens zum Teil gegenseitig überlappen und hierbei im Wesentlichen miteinander in Kontakt sind, so dass diese Mittel (46) wenigstens teilweise Positionierungsmittel bilden.

11. Winkelzubehör nach Anspruch 10,
**dadurch gekennzeichnet, dass** Auskragungen (53A, 53'A, 53B, 53'B) in wenigstens zwei verschiedenen Höhen der Halterungen (24A, 24B) vorhanden sind.

12. Winkelzubehör nach Anspruch 11,
**dadurch gekennzeichnet, dass** die Auskragungen (53A, 53'A, 53B, 53'B) an den Enden der Halterungen (24A, 24B) angeordnet sind.

13. Winkelzubehör nach einem der Ansprüche 11, 12,
**dadurch gekennzeichnet, dass** die Auskragungen (53A, 53'A) einer der Halterungen (24A, 24B) die Auskragungen (53B, 53'B) der anderen Halterung (24A, 24B) umfassen.

14. Winkelzubehör nach einem der Ansprüche 1 bis 13,
**dadurch gekennzeichnet, dass** die zwischen einer Halterung (24A, 24B) und dem Sockel (13) des entsprechenden Kabelkanalabschnitts (11A, 11B) vorgesehenen Verbindungsmittel (25) Rastmittel sind.

15. Winkelzubehör nach einem der Ansprüche 1 bis 14,
**dadurch gekennzeichnet, dass** die zwischen einer Halterung (24A, 24B) und dem Sockel (13) des entsprechenden Kabelkanalabschnitts (11A, 11B) vorgesehenen Verbindungsmittel (25) wenigstens eine für eine Verschraubung geeignete Bohrung (39) aufweisen.

16. Winkelzubehör nach einem der Ansprüche 1 bis 15,
**dadurch gekennzeichnet, dass** jede der Halterungen (24A, 24B) wenigstens drei Teile (28A, 29A, 28'A, 28B, 29B, 29'B) umfasst, die über ihre Länge bzw. Höhe verteilt imstande sind, voneinander getrennt zu werden, das heißt zwei Seitenteile (28A, 28'A, 28B, 28'B) und wenigstens ein Mittelteil (29A, 29B), und zwischen den Seitenteilen (28A, 28'A, 28B, 28'B) Verbindungsmittel (30) vorgesehen sind.

17. Winkelzubehör nach Anspruch 16,
**dadurch gekennzeichnet, dass** die zwischen den beiden Seitenteilen (28A, 28'A, 28B, 28'B) einer Halterung (24A, 24B) vorgesehenen Verbindungsmittel (30) einerseits an einem der Seitenteile (28A, 28'A, 28B, 28'B) wenigstens eine Lasche (33) umfassen, die lokal dieses Seitenteil (28A, 28B) verlängert und auf der im Wesentlichen senkrecht zu ihrer Dicke wenigstens ein Stift (34) vorsteht, und andererseits an dem anderen Seitenteil (28'A, 28'B) wenigstens einen Einschnitt (33') aufweisen, der zur Aufnahme der Lasche (33) des vorstehend genannten Seitenteils (28A, 28B) geeignet ist und mit dem ein Steg (35) zusammenwirkt, der wenigstens eine Aussparung (36) aufweist, die zum Einführen des entsprechenden Stifts (34) geeignet ist.

18. Winkelzubehör nach einem der Ansprüche 16, 17,
**dadurch gekennzeichnet, dass** die drei Teile (28A, 29A, 28'A, 28B, 29B, 28'B) einer Halterung (24A, 24B) durch zerbrechbare Bereiche geringeren Widerstands miteinander verbunden sind.

19. Winkelzubehör nach einem der Ansprüche 1 bis 18,
**dadurch gekennzeichnet, dass** die Aufnahmemittel (26), die eine Halterung (24A, 24B) zum Befestigen der entsprechenden Seitenwand (23A, 23B) der Abdeckung (23) umfasst, Rastmittel sind.

20. Winkelzubehör nach einem der Ansprüche 1 bis 19,
**dadurch gekennzeichnet, dass** jede der Seitenwände (23A, 23B) der Abdeckung (23) wenigstens drei Teile umfasst (54A, 55A, 54'A, 54B, 55B, 54'B), die über deren Länge bzw. Höhe verteilt durch Verbindungsmittel (56) miteinander in Eingriff sind, das heißt zwei Seitenteile (54A, 54'A, 54B, 54'B) und ein Mittelteil (55A, 55B).

21. Winkelzubehör nach Anspruch 20,
**dadurch gekennzeichnet, dass** die zwischen den einzelnen Teilen (54A, 55A, 54'A, 54B, 55B, 54'B) einer Seitenwand (23A, 23B) der Abdeckung (23) vorgesehenen Verbindungsmittel (56) Nut- (57) und Feder- (57') Elemente aufweisen, die parallel zur Dicke einer derartigen Seitenwand (23A, 23B) angeordnet sind.

22. Winkelzubehör nach Anspruch 21,
**dadurch gekennzeichnet, dass** bei den Seitenteilen (54A, 54'A, 54B, 54'B) einer Seitenwand (23A, 23B) der Abdeckung (23) das eine ein Nut-Element (57) und das andere ein Feder-Element (57') aufweist, und das zugeordnete Mittelteil (55A, 55B) komplementär hierzu an einem seiner Querränder ein Feder-Element (57') und ein Nut-Element (57) am anderen Rand aufweist.

23. Winkelzubehör nach einem der Ansprüche 1 bis 22,
**dadurch gekennzeichnet, dass** zwischen den Seitenwänden (23A, 23B) der Abdeckung (23) und den entsprechenden Halterungen (24A, 24B) Einsteckmittel (62) vorgesehen sind.
